# EUROPEAN PATENT APPLICATION

(11) **EP 3 273 501 A1**
(43) Date of publication of application: **24.01.2018**
(21) Application number: 17182402.2
(22) Date of filing: 20.07.2017
(51) Int. Cl.: H01M 2/10, H01M 2/20

(54) **A RECHARGEABLE BATTERY MODULE**

(30) Priority: 22.07.2016 TR 201610197
(71) Applicant: Temsa Global Sanayi ve Ticaret Anonim Sirketi, 01323 Seyhan-Adana (TR)
(72) Inventor: Burak, ONUR, ADANA (TR); Ibrahim, OGUZ, 0123 ADANA (TR); Emrah, YIRIK, 0123 ADANA (TR)
(74) Representative: Dericioglu Kurt, Ekin

(57) **Abstract**

The inventive battery module (1) keeps together the individual batteries (2) present in a battery pack, preventing them from touching each other, and thus enabling the batteries (2) to cool down, and isolate the extreme temperature in the event of a short circuit.

## Description

### Field of the Invention

The present invention relates to a modular rechargeable battery module for the energy storing systems of electric vehicles.

### Background of the Invention

Presently, electric vehicles are produced in order to reduce fuel consumption, to lower pollution of the cities, and to lower carbon emissions. The said electric vehicles run on the energy of electricity, and utilize the electricity that is stored in the batteries or other energy storing devices, for energizing the one or more electric motors it uses.

The battery energy modules are used for the vehicles that run on electricity, and they can be used in all vehicles that run on electricity which are used in the industry of transporting loads, and passengers. Additionally, they are used as an energy system for the uninterrupted power supply systems.

However, in the known applications of the art, in order for the battery modules to stay together, 18650 rechargeable lithium batteries of standard type are used, and they are connected to each other in parallel, and they are turned into a module. In this system, an air gap (7) is left between the cells so as to prevent the cells from touching each other as the result of the expansion during the recharge, and the amount of the gap has been optimized. As the cells are welded via CNC laser or CNC resistance welding, the distribution of the welding spots is constant, and by the virtue of this, it is provided that the difference of internal resistances of the cells affects the life of the cells the least.

The United States patent document numbered US8426063 in the background of the invention discloses a battery module which consists of numerous batteries which are connected to each other. The conductive plate is used for establishing the electric connection with the cells of the battery via the bar having numerous protrusions.

### Problems Solved by the Invention

The object of the invention is to provide a novel battery system for providing control of the batteries, and the pack that holds the batteries together during the charging and discharging of the batteries.

### Detailed Description of the Invention

The battery module in order to fulfill the objects of the present invention is illustrated in the attached figures, where:

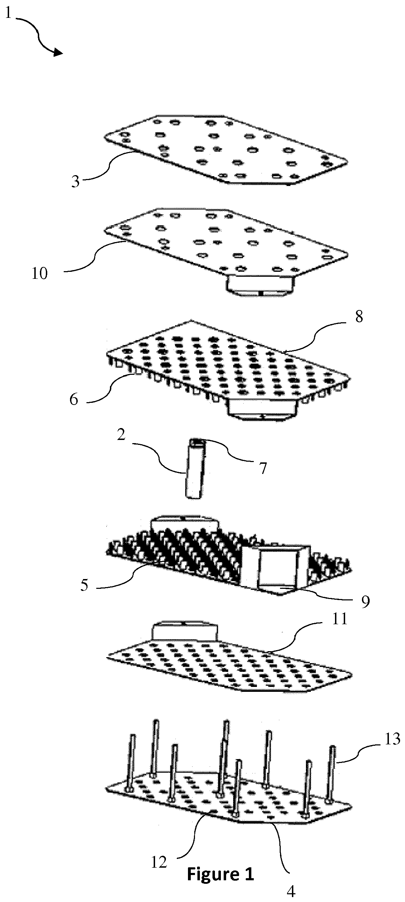

**Figure 1****.** Exploded view of the battery module.

Elements shown in the figures are individually numbered, and the correspondence of these numbers are given as follows:
**1.** Battery module
**2.** Battery
**3.** Top cover
**4.** Bottom cover
**5.** Bottom latch
**6.** Top latch
**7.** Air gap
**8.** Upper body
**9.** Lower body
**10.** Positive conducting plate
**11.** Negative conducting plate
**12.** Connection hole
**13.** Mounting piece

The inventive battery module (1) essentially comprises,
- At least one lower body (9),
- At least one upper body (8),
- Multiple batteries (2),
- Multiple bottom latches (5) for attaching the negative poled edge of the battery, that are located on the lower body (9), and that have a holey structure,
- Multiple top latches (5) for attaching the positive poled edge of the battery and for keeping the batteries (2) steady by squeezing them between the lower body (9) and the upper body (8) so that they do not touch each other and they have an air gap (7) between each other, that are located on the upper body (8), and that have a holey structure,
- A positive conducting plate (10) which is welded to the positive pole of the batteries (2), and which have a holey structure,
- A negative conducting plate (11) which is welded to the negative pole of the batteries (2), and which have a holey structure,
- Multiple connection holes (12), which are concentric when the batteries (2) are between the lower body (9) and the upper body (8), and when the structure consisting of the lower body (9), upper body (8) and the batteries (2) is between the conductive plates; and which are located on the upper body (8), plates, and a top cover (3), and
- A bottom cover (4) having multiple mounting pieces (13), which pass through the concentric connection holes (12) in order to be fixed to the upper body (8).

The inventive battery module (1) consists of a lower body (9), an upper body (8), and the multiple batteries (2) are placed on the lower body (9). Multiple bottom latches (5) are present on the lower body (9) for attaching the negative poled edge of the said battery. The bottom latches (5) are of holey structure, and they enable the battery (2) to be located. The positive poled edges of the battery are mounted by the virtue of the top latches (6). The positive and the negative poled edges are squeezed in between the lower body (9) and the upper body (8), and they stay stationary by the virtue of the top latch (6) such that they do not contact each other, and they have space in between them. There are multiple of the said top latches (6), and they are of a holey structure.

The air gap (7) (approximately 1-3 mm) that is formed between the batteries (2) enables the batteries (2) to cool down (2), and in the event of a short circuit, it isolates the heat generated by the batteries (2). After the batteries (2) are placed on the lower body (9), it is covered by the upper body (8). Additionally, the positive pole of the batteries (2) are connected to the positive conducting plate (10) of holey structure, by welding. The welding is done by resistance welding or laser welding. The same process is also applied to the negative poles of the batteries (2), and they are welded with the negative conducting plate (11).

After the welding process is finalized, it is covered with a top cover (3). The covering is achieved by screwing the mounting pieces (13) which pass through the concentric connection holes (12) which are located on the lower body (9), upper body (8), plates and the top cover (3). The said mounting piece (3) enables fixing of the bottom cover (4) to the upper body (8) by passing through the connection holes (12), and it is fixed by screwing from the top of the top cover (3).

In an embodiment of the invention, copper is used as positive conducting plate (10) and negative conducting plate (11).

In an embodiment of the invention, the batteries (2) are welded by resistance welding or laser welding.

## Claims

1. A battery module (1), essentially **comprising;**
- At least one lower body (9),
- At least one upper body (8),
- Multiple batteries (2) **and characterized by**
- Multiple bottom latches (5) for attaching the negative poled edge of the battery, that are located on the lower body (9), and that have a holey structure,
- Multiple top latches (5) for attaching the positive poled edge of the battery and for keeping the batteries (2) steady by squeezing them between the lower body (9) and the upper body (8) so that they do not touch each other and they have an air gap (7) between each other, that are located on the upper body (8), and that have a holey structure,
- A positive conducting plate (10) which is welded to the positive pole of the batteries (2), and which have a holey structure,
- A negative conducting plate (11) which is welded to the negative pole of the batteries (2), and which have a holey structure,
- Multiple connection holes (12), which are concentric when the batteries (2) are between the lower body (9) and the upper body (8), and when the structure consisting of the lower body (9), upper body (8) and the batteries (2) is between the conductive plates; and which are located on the upper body (8), plates, and a top cover (3), and
- A bottom cover (4) having multiple mounting pieces (13), which pass through the concentric connection holes (12) in order to be fixed to the upper body (8).

2. A battery module (1) as in Claim 1 **characterized by** the positive conductive plate (10) on which copper material is used.

3. A battery module (1) as in Claim 1 **characterized by** the positive conductive plate (11) on which copper material is used.
